# EUROPÄISCHE PATENTSCHRIFT

(11) **EP 2 975 487 B1**
(45) Veröffentlichungstag und Bekanntmachung des Hinweises auf die Patenterteilung: **05.10.2016**
(21) Anmeldenummer: 14177488.5
(22) Anmeldetag: 17.07.2014
(51) Int. Cl.: G05D 11/00, B01F 15/04, B01F 5/04

(54) **Vorrichtung zum Dosieren und Mischen zweier fließfähiger Komponenten**
Device for dosing and mixing two flowable components
Dispositif destiné à doser et mélanger deux composants pouvant s'écouler

(43) Veröffentlichungstag der Anmeldung: 20.01.2016
(73) Patentinhaber: Hoffner, Jürgen, 68753 Waghäusel (DE)
(72) Erfinder: Hoffner, Jürgen, 68753 Waghäusel (DE)
(74) Vertreter: Durm & Partner

(56) Entgegenhaltungen:
- EP-B1- 0 755 300
- AT-B- 270 420
- DE-A1- 19 730 424
- US-A- 3 182 860
- US-A- 4 736 769

## Beschreibung

Die Erfindung betrifft eine Vorrichtung entsprechend Anspruch 1 zum Mischen einer ersten und einer zweiten fließfähigen Komponente in einem definierten Verhältnis. Die Vorrichtung umfasst Einlassöffnungen, durch die die erste Komponente in eine Mischkammer einströmt. Es ist weiter ein Mischeinsatz zum Zusammenführen der ersten Komponente und der zweiten Komponente vorgesehen, der die Mischkammer einseitig begrenzt und den Volumenstrom eines entstehenden Komponentengemisches beschränkt. Ferner umfasst die Vorrichtung eine beweglich angeordnete Zwischenwandung, die durch die einströmende erste Komponente eine Verschiebung erfährt und dadurch Druck auf die zweite Komponente ausübt. Die Vorrichtung umfasst auch eine Dosiereinrichtung zur dosierten Zugabe der zweiten Komponente zu der ersten Komponente.

Derartige Vorrichtungen werden beispielsweise bei der Verarbeitung von feuchtigkeitshärtenden Dicht- bzw. Klebstoffen verwendet. Dabei werden die zähflüssigen Dicht- bzw. Klebstoffe mit einem Härter zumeist in Form von Polymerlösungen vermischt. Nach Kontakt mit dem Härter härten die Dicht- bzw. Klebstoffe aus und entfalten ihre dichtende bzw. klebende Wirkung. Alternativ können die Dicht- bzw. Klebstoffe ohne vorheriges Mischen mit einem Härter auf eine Klebefläche oder eine Dichtfuge appliziert werden. Das Aushärten erfolgt dann, indem die Dicht- bzw. Klebstoffe mit Luftfeuchtigkeit in Kontakt kommen.

Die EP 0 755 300 B1 offenbart eine solche Vorrichtung. Diese dient zum Zusammenführen von wenigstens zwei in getrennten Kammern vorgehaltenen Fließmedien. Die erste Kammer ist mit einem ersten Fließmedium befüllbar, das durch eine Öffnung aus der ersten Kammer in einen Fließbereich strömen kann. Der Fließbereich verfügt weiter über eine Ausgangsöffnung, aus der das erste Fließmedium aus dem Fließbereich austritt. Die Vorrichtung weist weiter eine zweite, mit einem zweiten Fließmedium befüllbare Kammer auf, die mindestens ein erstes Öffnungselement aufweist, über das sie mit dem Fließbereich verbunden ist. Die zweite Kammer hat ein zweites Öffnungselement, über das sie mit dem Fließbereich und/oder mit der Ausgangsöffnung des Fließbereichs verbunden ist. Die in den getrennten Kammern vorgehaltenen Fließmedien können nicht vollständig homogen miteinander vermischt werden. Das Mischverhältnis der beiden Fließmedien ist ungenau und kann während des Mischvorgangs variieren. Dadurch härtet das Komponentengemisch ungleichmäßig und unkontrolliert aus.

Die DE 197 30 424 A1 offenbart eine Vorrichtung entsprechend dem Oberbegriff des Anspruch 1.

Angesichts der beschriebenen Problematik ist es Aufgabe der vorliegenden Erfindung, eine verbesserte Dosier- und Mischvorrichtung herzustellen, die eine konstante Dosierung und ein homogenes Vermischen der einzelnen Komponenten und damit ein kontrolliertes Aushärten des Gemischs ermöglicht.

Gelöst wird die Aufgabe durch eine Vorrichtung mit den Merkmalen des Anspruchs 1.

Erfindungsgemäß umfasst die Vorrichtung eine Dosiereinrichtung mit zwei aneinanderstoßenden Dosierflächen mit definierter Oberflächenrauheit. Die zweite Komponente tritt aufgrund des durch die Zwischenwandung ausgeübten Drucks parallel zu den Dosierflächen zwischen diesen hindurch. Die Dosierung der zweiten Komponente erfolgt in Abhängigkeit der Oberflächenrauheit der Dosierflächen. Durch ihre definierte Rauheit liegen die beiden Dosierflächen an ihren jeweils höchsten Erhebungen aufeinander auf. Zwischen den einzelnen Erhebungen der Dosierflächen entstehen Durchflussöffnungen, durch die die zweite Komponente in Richtung des Mischeinsatzes durch die Dosiereinrichtung hindurchtreten kann. Bevorzugt bilden die Durchflussöffnungen insgesamt einen Durchflussquerschnitt von höchstens 2000 µm², besonders bevorzugt einen Durchflussquerschnitt im Bereich zwischen 20 µm² bis 600 µm², weiter besonders bevorzugt zwischen 20 µm² bis 314 µm², weiter besonders bevorzugt zwischen 79 µm² bis 177 µm². Optional kann die Dosierung der zweiten Komponente durch weitere Einflussfaktoren, wie beispielsweise der Materialwahl der Dosierflächen, dem Druck der auf die zweite Komponente wirkt oder der Gangbarkeit der Zwischenwandung, beeinflusst werden. Die Dosierung kann somit gezielt auf die Viskosität der verwendeten Komponenten eingestellt werden. Damit ist die erfindungsgemäße Vorrichtung nicht auf einzelne Komponenten mit einer bestimmten Viskosität limitiert. Vielmehr ist die erfindungsgemäße Vorrichtung geeignet, Komponenten aus einem breiten Viskositätsbereich miteinander zu mischen.

Als erste Komponente wird bevorzugt ein feuchtigkeitshärtender Dicht- bzw. Klebstoff verwendet, der beispielsweise über eine Kartusche der erfindungsgemäßen Vorrichtung zugeführt wird. Als zweite Komponente kommt bevorzugt Wasser, beispielsweise pures Leitungswasser, zum Einsatz. Dieses kann entweder in der Vorrichtung vorgehalten oder extern zugeführt werden. Bevorzugt weist die zweite Komponente eine niedrigere Viskosität auf als die erste Komponente. Es ist aber auch denkbar, als zweite Komponente eine Polymerlösung zu verwenden. Ebenfalls denkbar ist es, die zweite Komponente mit einem Farbstoff einzufärben.

Im Rahmen der vorliegenden Erfindung werden feuchtigkeitshärtende Dicht- bzw. Klebstoffe unter dem Begriff "Dichtstoffe" zusammengefasst. Als Dichtstoffe können feuchtigkeitshärtende Dicht- und Klebstoffe jedweder Art mit nahezu jeder Viskosität genutzt werden. Beispielsweise können Dichtstoffe wie Polyurethane (PU), MS-Polymere und Silikone usw. verwendet werden. Weiter wird im Rahmen der Erfindung das aus der Vorrichtung ausgetretenen Komponentengemisch als "Raupe" bezeichnet. Eine solche Raupe wird beispielsweise auf eine Klebefläche aufgetragen oder in eine Dichtungsfuge eingespritzt.

In einer bevorzugten Ausführungsform beträgt die Oberflächenrauheit der Dosierflächen höchstens Rₐ = 8 µm, bevorzugt höchstens Rₐ = 5 µm, besonders bevorzugt wenigstens Rₐ = 0,4 µm bis höchstens Rₐ = 4 µm. Durch besagte Oberflächenrauheiten wird eine Feinstdosierung der zweiten Komponente ermöglicht, so dass die erfindungsgemäße Vorrichtung in der Lage ist, z. B. 1.000 Anteile der ersten Komponente zu 3 Anteilen der zweiten Komponente zu mischen. Die Herstellung der vorgesehenen Oberflächenrauheiten kann mechanisch, beispielsweise durch Schleifen, Fräsen, Hobeln, Honen, Läppen, Erodieren, Drehen, oder chemisch, beispielsweise durch Ätzen, oder durch andere bekannte Verfahren, beispielsweise durch Sintern, erfolgen. Alternativ kann die Oberflächenrauheit auch durch Bedrucken oder ein Schichtauftragsverfahren, durch das Unebenheiten erzeugt werden können, erfolgen. Auch eine Laserbearbeitung der Dosierflächen ist denkbar. Es versteht sich, dass die Rauheit der Dosierflächen in Abhängigkeit der Viskosität der zweiten Komponente gewählt wird.

Weiter bevorzugt ist eine Ausführungsform, bei der der Mischeinsatz als Trichter ausgebildet ist. Die Trichterform begünstigt eine vollständig homogene Vermischung der ersten und der zweiten Komponente. Dadurch kann der Zeitraum zur Aushärtung der Dichtstoffe vorbestimmt und damit reduziert werden. Es ist somit zum Beispiel möglich, den Zeitpunkt zur Erreichung eines gewissen Härtegrads zu steuern. Der Trichter ist derart angeordnet, dass die beiden Komponenten an der Stelle des größten Trichterquerschnitts in diesen eintreten, den Trichter entlang seiner Verjüngung durchlaufen und an der Stelle des geringsten Querschnitts aus diesem austreten. Die Neigung der Trichterwand wird in Abhängigkeit der zu vermischenden Komponenten und in Abhängigkeit des durch den Trichter entstehenden Strömungswiderstands gewählt. Bevorzugt liegt der Neigungswinkel in einem Bereich zwischen 30° und 60° zur Längsachse des Trichters, besonders bevorzugt zwischen 40° und 50°, weiter besonders bevorzugt beträgt er 45°.

Weiter bevorzugt weist der Trichter einen Trichterhals auf, an dessen unterem Ende das Komponentengemisch austritt. Der Trichterhals kann im Querschnitt zylindrisch, rechteckig oder sternförmig ausgebildet sein. Andere Querschnittsgeometrien sind ebenfalls denkbar. Der Trichterhals minimiert die innerhalb der Vorrichtung auftretenden Druckverluste. Dadurch ist es möglich, Klebstoffpistolen mit erheblich niedrigerer Leistung als bisher einzusetzen. Dadurch können Kosten bei der Verarbeitung der Dichtstoffe reduziert werden. Bevorzugt weist der Trichterhals eine Länge von höchstens 1,5 mm, besonders bevorzugt von höchstens 1 mm, weiter besonders bevorzugt von höchstens 0,8 mm, weiter bevorzugt von höchstens 0,5 mm, weiter bevorzugt in einem Bereich zwischen 0,1 mm und 0,5 mm auf.

Im Rahmen der Erfindung wurde erkannt, dass die Vorteile der beschriebenen Trichtergeometrie auch bei entsprechend geformten Auslassöffnungen jeglicher Art auftreten, durch die unter Druck stehende Stoffe gepresst werden. Beispielsweise ist es vorteilhaft, Auslassöffnungen von Düsenspitzen, d.h. Öffnungen, durch die die in einer Kartusche enthaltene Komponente oder Komponenten beim Applizieren derselben austreten, entsprechend der beschriebenen Trichtergeometrie zu formen. Die fließfähigen Stoffe können durch diese Geometrie nahezu komprimierfrei ausgetragen werden. Die Formstabilität der Auslassöffnung bleibt relativ unabhängig vom Verarbeitungsdruck der zu verarbeitenden Komponenten erhalten. Besonders thixotrope oder dilatante Medien können so mit erheblich niedrigerem technischen Aufwand verarbeitet werden. Durch nahezu Aufrechterhaltung der Schergeschwindigkeiten bauen diese Stoffe nicht wie üblich eine eigentlich höhere Viskosität auf. Es ist beispielsweise ebenfalls denkbar, Auslassöffnungen von Applikationsdüsen oder -röhrchen mit Statikmischern entsprechen der beschriebenen Trichtergeometrie zu formen.

In einer weitern optionalen Ausführungsform weist der Trichter in Flussrichtung unmittelbar nach seinem unteren Ende eine Aufnahme für einen Statikmischer auf. Der zusätzliche Statikmischer bewirkt eine optional abschließende Homogenisierung der Komponenten. Dadurch wird die Variabilität der erfindungsgemäßen Vorrichtung und damit die Anzahl der potentiellen Dichtstoffe, die mithilfe der erfindungsgemäßen Vorrichtung gemischt werden können, weiter erhöht.

Optional ist die Dosiereinrichtung benachbart zu dem Mischeinsatz angeordnet, wobei die aus der Dosiereinrichtung austretende zweite Komponente direkt in den Mischeinsatz einströmt. Durch diese räumliche Nähe wird ermöglicht, dass die zweite Komponente nach Austritt der Dosiereinrichtung zeitlich vor der ersten Komponente den Mischeinsatz erreicht. Dadurch ist gewährleistet, dass eine Dichtstoffraupe von Anfang an mit der zweiten Komponente vollständig durchsetzt ist.

Weiter bevorzugt umfasst die Dosiereinrichtung zwei Blöcke in Form rechteckiger Quader, wobei jeweils mindestens eine der Seitenflächen als Dosierfläche ausgebildet ist. Die Blöcke sind in der erfindungsgemäßen Vorrichtung fixiert. Dadurch wird vermieden, dass die unter Druck stehende zweite Komponente die beiden Dosierflächen voneinander abhebt und so ein unkontrolliertes Durchfließen der zweiten Komponente durch die Dosiereinrichtung entsteht.

Ebenfalls bevorzugt ist eine Ausführungsform, bei der die Dosiereinrichtung zwei Zylinder mit jeweils mindestens einer Stirnfläche umfasst, wobei die mindestens eine Stirnfläche jeweils als Dosierfläche ausgebildet ist.

Besonders bevorzugt ist eine Ausführungsform, bei der die Zwischenwandung als Kolben ausgebildet ist. Der, Kolben ermöglicht eine kontinuierliche Kraftübertragung auf die zweite Komponente, so dass diese in Abhängigkeit des Massenstroms der ersten Komponente mit Druck beaufschlagt wird. Der Kolben kann beispielsweise aus Kunststoffen, Metallen etc. ausgeführt sein. Optional kann durch Variation der Gangbarkeit des Kolbens Einfluss auf die Dosierung der zweiten Komponente genommen werden. Dies erfolgt beispielsweise durch Variation des Kolbenmaterials oder den Einsatz unterschiedlicher Dichtungen, die ein Umspülen des Kolbens durch die erste Komponente verhindern.

Ein Ausführungsbeispiel der Erfindung wird nachstehend anhand der beigefügten Zeichnungen beschrieben. Es zeigen:
- Figur 1: eine perspektivische Darstellung einer Vorrichtung zum Mischen;
- Figur 2: die Vorrichtung von Fig. 1, in einer Schnittansicht;
- Figur 3: die Dosiereinrichtung und den Mischeinsatz der Vorrichtung von Fig. 1, in vergrößertem Maßstab;
- Figur 4: eine Draufsicht der Vorrichtung von Fig. 1, ohne Deckel.

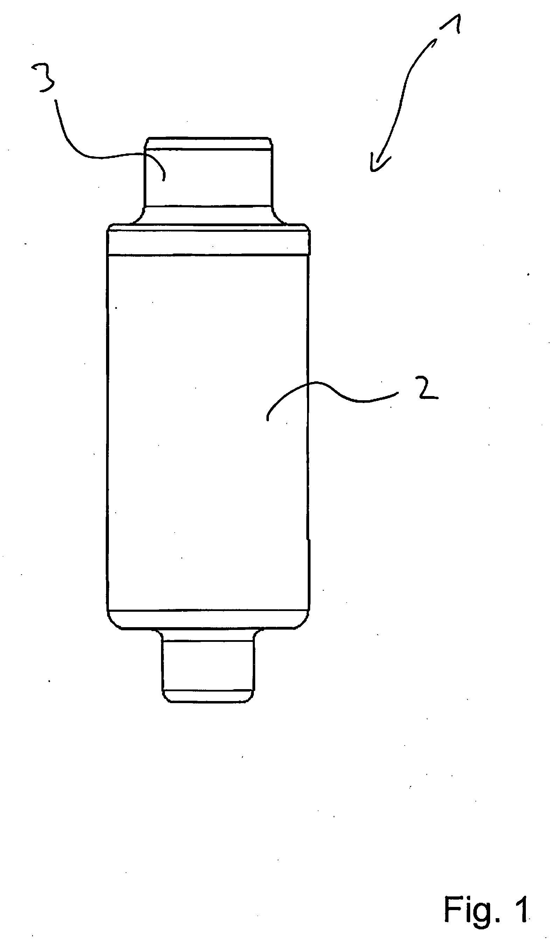

Figur 1 zeigt eine Vorrichtung 1 zum Mischen einer fließfähigen ersten Komponente und einer fließfähigen oder flüssigen zweiten Komponente in einem definierten Verhältnis. Die Vorrichtung umfasst einen Grundkörper 2, der aus verschiedensten Kunststoffen oder Metallen, beispielsweise ABS oder Polyamid mit oder ohne Glasfaser, gegebenenfalls auch HD-PE, besteht. Der Grundkörper 2 verfügt über ein Außengewinde, an dem eine Düsenspitze (nicht dargestellt) angeschraubt werden kann. Es ist jedoch denkbar, einen Auslass bzw. die Düsenspitze auch direkt am Grundkörper 2 anzubringen.

Auf dem Grundkörper 2 ist ein Deckel 3 angeordnet. Dieser ist mittels Kleben, Klippsen oder Ultraschallschweißen mit dem Grundkörper 2 verbunden und verhindert ein Austreten von den im Grundkörper 2 befindlichen Flüssigkeiten. Der Deckel 3 verfügt über ein Innengewinde, mittels dem die Vorrichtung 1 auf eine Kartusche aufgeschraubt werden kann, die die erste Komponente, ein Dichtstoff, beinhaltet. Der Deckel kann aus verschiedensten Kunststoffen oder Metallen gefertigt sein.

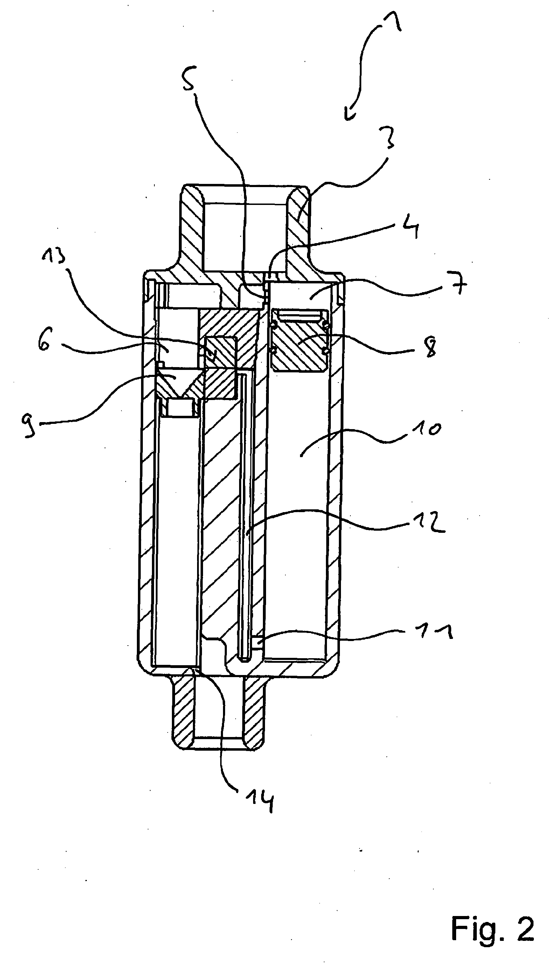

Gemäß Figur 2 weist die Vorrichtung 1 zwei Einlassöffnungen 4, 5 auf, durch die die erste Komponente in eine Mischkammer 6 einströmt. Die erste Einlassöffnung 4 befindet sich im Deckel 3 und ermöglicht ein Einfließen der Komponente 1 in eine Druckkammer 7, die an ihrer unteren Seite durch einen als Kolben 8 ausgebildete bewegliche Zwischenwandung begrenzt wird. Die zweite Einlassöffnung 5 verbindet die Druckkammer 7 mit der Mischkammer 6. Die Mischkammer 6 ist einseitig durch einen als Trichter 9 ausgebildeten Mischeinsatz begrenzt.

In Figur 2 unterhalb des Kolbens 8 ist eine Vorratskammer 10 angeordnet, in der sich die zweite Komponente, bevorzugt Wasser oder eine Polymerlösung, befindet. Alternativ ist es auch möglich, die zweite Komponente extern zuzuführen.

Die Vorratskammer 10 ist über einen Durchgang 11 mit einem Kanal 12 mit einer Dosiereinrichtung 13 verbunden. Die Dosiereinrichtung 13 ermöglicht eine dosierte Zugabe der zweiten Komponente zu der in der Mischkammer 6 befindlichen ersten Komponente.

Die Dosiereinrichtung 13 ist benachbart zu dem Trichter 9 angeordnet, wobei die aus der Dosiereinrichtung 13 austretende zweite Komponente direkt in den Trichter 9 einströmt.

Nachdem die erste und zweite Komponente gemeinsam den Trichter durchlaufen haben und von diesem zu einem homogenen Komponentengemisch vermischt wurden, treten sie an dem in Figur 2 unteren Ende des Grundkörpers 2 an einem Auslass 14 in Richtung der Auslassdüse (nicht gezeigt) der Vorrichtung 1 aus.

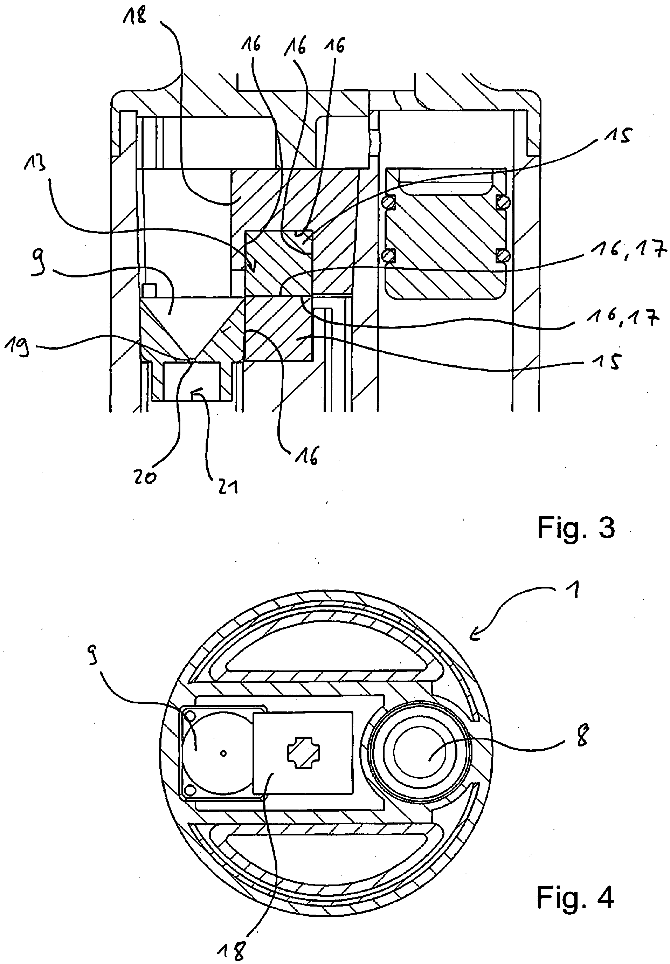

In Figur 3 sind die Dosiereinrichtung 13 und der benachbarte Trichter 9 im Detail dargestellt.

Die Dosiereinrichtung 13 weist zwei Blöcke 15 auf, die bevorzugt als rechteckige Quader ausgebildet sind und mehrere ebene Seitenflächen 16 haben. Mindestens eine der Seitenflächen 16 ist jeweils als Dosierfläche 17 ausgebildet. Die Blöcke 15 sind derart angeordnet, dass die Dosierflächen 17 aneinanderstoßen.

Die Dosierflächen 17 weisen eine definierte Oberflächenrauheit von wenigstens Rₐ = 0,4 µm bis höchstens Rₐ = 4 µm auf. Dadurch entsteht ein Durchflussquerschnitt von wenigstens 20 µm² bis 600 µm², der ermöglicht, dass die zweite Komponente parallel zu den Dosierflächen 17 zwischen diesen durch die Dosiereinrichtung 13 hindurchtritt. Die Dosierung der zweiten Komponente ist hauptsächlich durch Wahl der Oberflächenrauheit der Dosierflächen 17 einstellbar. Die Menge der zugegebenen zweiten Komponente hängt also von der Oberflächenrauheit der Dosierflächen (17) ab. Die Oberflächenrauheit kann entlang der Flussrichtung der zweiten Komponente in Richtung des Trichters 9 variieren. Beispielsweise ist ein erster Bereich der Dosierflächen 17 mit einer höheren Rauheit versehen als ein zweiter Bereich, der eine geringere Rauheit aufweist, oder umgekehrt. Es ist ebenfalls denkbar, dass die Rauheit der Dosierflächen 17 quer zur Flussrichtung der zweiten Komponente variiert. Beispielsweise nimmt die Rauheit der Dosierflächen 17 quer zur Flussrichtung der zweiten Komponente in Richtung der Seitenflächen 13 der Blöcke 15 hin ab. Dadurch wird verhindert, dass die zweite Komponente quer zur Flussrichtung aus der Dosiereinrichtung 13 austritt. Beispielsweise können die Dosierflächen 17 im Bereich der Seitenflächen 13 bei der Verwendung von Wasser als zweite Komponente eine Rauheit zwischen Rₐ = 0,05 µm und Rₐ = 0,8 µm aufweisen.

Es ist denkbar, die aneinanderstoßenden Dosierflächen 17 in einer Schräge oder einer anderen Geometrie verlaufen zu lassen. Verlaufen die Dosierflächen 17 in einer Schräge, weisen die Blöcke 15 jeweils eine Keilform auf. Es ist ebenfalls denkbar, dass der in Figur 2 gezeigte unter Block 15 Teil des Grundkörpers 2 ist und nur der in Figur 2 obere Block 15 auf den untern Block 15 aufgesetzt wird. Es versteht sich, dass der in dem Grundkörper 2 integrierte untere Block 15 und der obere Block 15 in dieser denkbaren Ausführungsform ebenfalls beide aneinanderstoßende Dosierflächen 17 aufweisen.

Optional kann die Dosierung der zweiten Komponente zusätzlich über die Materialwahl und die Größe der Dosierflächen 17 eingestellt werden. Beispielsweise erstreckt sich die Dosierfläche 17 nur über einen Teilbereich des Blocks 15. Es versteht sich, dass der Block 15 in diesem Fall in Flussrichtung der zweiten Komponente unmittelbar vor bzw. nach der Dosierfläche 17, je nach Position der Dosierfläche 17, eine Aussparung aufweist, um den Durchfluss der zweiten Komponente zwischen den Dosierflächen 17 nicht zu behindern. Im Rahmen der Erfindung wurde erkannt, dass weichere Materialien, beispielsweise weichere Kunststoffe, eine geringere Menge der zweiten Komponente durchlassen als härtere Materialien, wie beispielsweise Metalle, Keramiken oder härtere Kunststoffe.

Die Blöcke 15 der Dosiereinrichtung 13 werden über ein Halteelement 18 in der Vorrichtung 1 fixiert. Dadurch wird verhindert, dass die unter Druck stehende zweite Komponente die Blöcke 15 und damit die Dosierflächen 17 auseinanderdrückt.

Weiter ist in Figur 3 auch der Trichter 9 im Detail dargestellt. Dieser weist in Flussrichtung nach seiner konisch zusammenlaufenden Wandung, d.h. nach der engsten Stelle seines Querschnitts, einen zylindrisch ausgebildeten Trichterhals 19 mit einem unteren Ende 20 auf. Nach Durchmischung des Komponentengemischs durch den Trichter 9 tritt dieses am unteren Ende 20 aus dem Trichter 9 aus. Der Trichter 9 verfügt weiter in Flussrichtung des Komponentengemischs unmittelbar nach seinem unteren Ende 20 über eine Aufnahme 21 für einen Statikmischer (nicht dargestellt), der optional in die Aufnahme 21 eingesteckt werden kann.

In Figur 4 ist die Vorrichtung 1 in einer Draufsicht ohne Deckel gezeigt. Zu erkennen ist der Kolben 8, der gegenüber dem Trichter 9 angeordnet ist. Das Halteelement 18 befindet sich zwischen dem Kolben 8 und dem Trichter 9 und stützt sich an dem (hier abgenommenen) Deckel 3 (vgl. Fig. 1) ab.

Die Geometrie des Kolbens 8 ist nicht auf eine runde Form beschränkt. Es ist denkbar, den Kolben, oval, U-förmig oder auch in anderen geometrischen Formen zu gestalten.

Im Folgenden soll anhand der Figuren 1 - 4 die Funktionsweise der Vorrichtung 1 näher erläutert werden.

Die Vorrichtung 1 ist über den Deckel 3 auf einer Kartusche (nicht dargestellt) aufgeschraubt, die wiederum in einer Dichtstoffpistole (nicht dargestellt) angeordnet ist.

Mithilfe der Dichtstoffpistole wird die erste Komponente aus der Kartusche durch den Deckel 3 und die erste Einlassöffnung 4 in die Druckkammer 7 befördert. Durch die in die Druckkammer 7 eintretende erste Komponente übt diese Druck auf den Kolben 8 aus. Dieser erfährt durch die einströmende erste Komponente eine Verschiebung und übt dadurch Druck auf die in der Vorratskammer 10 angeordnete zweite Komponente aus.

Durch diesen Druck tritt die zweite Komponente aus der Vorratskammer 10 durch den Durchgang 11 in den Kanal 12 aus und fließt durch den Kanal 12 in Richtung der Dosiereinrichtung 13. Aufgrund des durch den Kolben 8 auf die zweite Komponente ausgeübten Drucks dringt diese zwischen den Dosierflächen 17 und parallel zu diesen durch die Dosiereinrichtung 13 hindurch und strömt in den Trichter 9 ein.

Zeitgleich strömt die erste Komponente, nachdem sie die Druckkammer 7 befüllt hat, durch die zweite Einlassöffnung 5 in die Mischkammer 6 und trifft auf die zweite Komponente. Dabei ist darauf zu achten, dass, bevor die erste Komponente den Trichter 9 erreicht, dieser bereits von der zweiten Komponente vollständig benetzt ist. Dadurch wird eine Vermischung beider Komponenten direkt von Anfang an gewährleistet.

Die erste Komponente presst nun die zweite Komponente an die Schrägen des Trichters 9, wodurch eine gewollte statische Verteilung der zweiten Komponente erfolgt. Mithilfe des Trichters 9 wird eine homogene Vermischung der beiden Komponenten erreicht.

Sollte das Mischergebnis zweier Komponenten unzureichend sein, kann zur weiteren Homogenisierung des Komponentengemisches ein Statikmischer in die Aufnahme 21 des Trichters 9 eingesetzt werden.

Nach Durchströmen des Trichters 9 und dessen Trichterhalses 19 tritt das entstandene Komponentengemisch durch den Auslass 14 an dem in Figur 2 gezeigten unteren Ende des Grundkörpers 2 bzw. der Vorrichtung 1 aus dieser aus. Das Komponentengemisch kann dann als Raupe auf eine Klebefläche auf- oder in eine Dichtfuge eingebracht werden.

## Patentansprüche

1. Vorrichtung zum Mischen einer ersten fließfähigen Komponente und einer zweiten fließfähigen Komponente in einem definierten Verhältnis, umfassend,
Einlassöffnungen (4, 5), durch die die erste Komponente in eine Mischkammer (6) einströmt,
einen Mischeinsatz (9) zum Zusammenführen der ersten Komponente und der zweiten Komponente, der die Mischkammer (6) einseitig begrenzt und den Volumenstrom eines entstehenden Komponentengemisches beschränkt,
eine beweglich angeordnete Zwischenwandung (8), die durch die einströmende erste Komponente eine Verschiebung erfährt und dadurch Druck auf die zweite Komponente ausübt, und
eine Dosiereinrichtung (13) zur dosierten Zugabe der zweiten Komponente zu der ersten Komponente,
wobei die Dosiereinrichtung (13) zwei Dosierflächen (17) mit einer definierten Oberflächenrauheit umfasst, zwischen denen die zweite Komponente aufgrund des durch die Zwischenwandung (8) ausgeübten Drucks parallel zu den Dosierflächen (17) hindurchtritt, und
wobei die Menge der zugegebenen zweiten Komponente von der Oberflächenrauheit der Dosierflächen (17) abhängt.
**dadurch gekennzeichnet, dass**
die Dosiereinrichtung (13) zwei Blöcke (15) mit mehreren Seitenflächen (16) umfasst, wobei jeweils mindestens eine der Seitenflächen (16) als Dosierfläche (17) ausgebildet ist,
die Dosierflächen (17) aneinanderstoßen, und
die Blöcke (15) der Dosiereinrichtung (13) über ein Halteelement (18) in der Vorrichtung (1) derart fixiert sind, dass ein Auseinanderdrücken der Blöcke (15) und damit der Dosierflächen (17) durch die unter Druck stehende zweite Komponente verhindert wird.

2. Vorrichtung nach Anspruch 1, **dadurch gekennzeichnet, dass** die Oberflächenrauheit der Dosierflächen (17) höchstens Rₐ = 8 µm, bevorzugt höchstens Rₐ = 5 µm, weiter bevorzugt wenigstens Rₐ = 0,4 µm bis höchstens Rₐ = 4 µm beträgt.

3. Vorrichtung nach einem der vorhergehenden Ansprüche, **dadurch gekennzeichnet, dass** der Mischeinsatz als Trichter (9) ausgebildet ist.

4. Vorrichtung nach Anspruch 3, **dadurch gekennzeichnet, dass** der Trichter eine konisch verlaufende Trichterwand aufweist, deren Neigungswinkel zwischen 30° und 60° zur Längsachse des Trichters, bevorzugt zwischen 40° und 50°, besonders bevorzugt 45° beträgt.

5. Vorrichtung nach Anspruch 3 oder 4, **dadurch gekennzeichnet, dass** der Trichter (9) einen Trichterhals (19) aufweist, an dessen unteren Ende (20) das Komponentengemisch austritt.

6. Vorrichtung nach Anspruch 5, **dadurch gekennzeichnet, dass** der Trichterhals eine Länge von höchstens 1,5 mm, bevorzugt von höchstens 1 mm, besonders bevorzugt von höchstens 0,8 mm, weiter besonders bevorzugt von höchstens 0,5 mm, weiter besonders bevorzugt zwischen 0,1 mm und 0,5 mm aufweist.

7. Vorrichtung nach einem der Ansprüche 3 bis 6, **dadurch gekennzeichnet, dass** der Trichter (9) in Fließrichtung unmittelbar nach seinem unteren Ende (20) eine Aufnahme (21) für einen Statikmischer aufweist.

8. Vorrichtung nach einem der vorhergehenden Ansprüche, **dadurch gekennzeichnet, dass** die Dosiereinrichtung (13) benachbart zu dem Mischeinsatz (9) angeordnet ist, wobei die aus der Dosiereinrichtung (13) austretende zweite Komponente direkt in den Mischeinsatz (9) einströmt.

9. Vorrichtung nach einem der vorhergehenden Ansprüche, **dadurch gekennzeichnet, dass** die zwei Blöcke als Quader (15) ausgebildet sind, wobei jeweils mindestens eine ebene Seitenfläche (16) eine der Dosierflächen (17) bildet.

10. Vorrichtung nach einem der vorhergehenden Ansprüche, **dadurch gekennzeichnet, dass** die Blöcke (15) jeweils eine schräge Seitenfläche (16) aufweisen, die als Dosierfläche (17) ausgebildet ist.

11. Vorrichtung nach einem der vorhergehenden Ansprüche, **dadurch gekennzeichnet**, das die Zwischenwandung als Kolben (8) ausgebildet ist.

## Claims

1. Device for mixing a first flowable component and a second flowable component in a defined ratio, comprising,
inlet openings (4, 5) through which the first component flows into a mixing chamber (6),
a mixing inlet (9) for bringing together the first component and the second component, said mixing inlet (9) delimiting the mixing chamber (6) on one side and restraining the volume flow of an emerging component mixture,
a movably arranged intermediate wall (8) that is shifted by the first component flowing in and thus exerts pressure on the second component, and
a dosing mechanism (13) for the regulated addition of the second component to the first component,
wherein the dosing mechanism (13) comprises two dosing surfaces (17) with a defined surface roughness between which, due to the pressure exerted by the intermediate wall (8), the second component emerges parallel to the dosing surfaces (17), and
wherein the amount of the added second component depends on the surface roughness of the dosing surfaces (17),
**characterized in that**
the dosing mechanism (13) comprises two blocks (15) with several side surfaces (16), wherein at least one of the side surfaces (16) of each of the blocks (15) is designed as a dosing surface (17),
the dosing surfaces (17) meet, and
the blocks (15) of the dosing mechanism (13) are fixed in the device (1) with a fixing element (18) in such a way that it is prevented that the blocks (15) and thus the dosing surfaces (17) are pushed apart by the pressurized second component.

2. Device according to claim 1, **characterized in that** the surface roughness of the dosing surfaces (17) is at most Rₐ = 8 µm, preferably at most Rₐ = 5 µm, further preferably at least Rₐ = 0.4 µm to at most Rₐ = 4 µm.

3. Device according to any one of the preceding claims, **characterized in that** the mixing inlet is designed as a funnel (9).

4. Device according to claim 3, **characterized in that** the funnel comprises a conically tapered funnel wall whose inclination angle is between 30° and 60° in relation to the longitudinal axis of the funnel, preferably between 40° and 50°, particularly preferably 45°.

5. Device according to claim 3 or 4, **characterized in that** the funnel (9) comprises a funnel throat (19) at whose lower end (20) the component mixture exits.

6. Device according to claim 5, **characterized in that** the funnel throat has a length of at most 1.5 mm, preferably of at most 1 mm, particularly preferably of at most 0.8 mm, further particularly preferably of at most 0.5 mm, further particularly preferably between 0.1 mm and 0.5 mm.

7. Device according to any one of the claims 3 to 6, **characterized in that** the funnel (9) comprises a receptacle (21) for a static mixer directly adjacent to the funnel's lower end (20) in the flow direction.

8. Device according to any one of the preceding claims, **characterized in that** the dosing mechanism (13) is arranged adjacent to the mixing inlet (9), wherein the second component exiting the dosing mechanism (13) directly flows into the mixing inlet (9).

9. Device according to any one of the preceding claims, **characterized in that** the two blocks are designed as cuboids (15), wherein at least one plane side surface (16) each forms one of the dosing surfaces (17).

10. Device according to any one of the preceding claims, **characterized in that** the blocks (15) have a tilted side surface (16) each, which is designed as a dosing surface (17).

11. Device according to any one of the preceding claims, **characterized in that** the intermediate wall is designed as a piston (8).

## Revendications

1. Dispositif destiné à mélanger un premier composant apte à l'écoulement et un deuxième composant apte à l'écoulement en un rapport défini, comprenant :
des ouvertures d'entrée (4, 5), à travers lesquelles le premier composant afflue dans une chambre de mélange (6),
un insert de mélange (9) destiné à réunir le premier composant et le deuxième composant, qui délimite d'un côté la chambre de mélange (6) et limite le débit volumétrique d'un mélange de composants créé,
une cloison (8) agencée mobile, qui subit un déplacement en raison de l'afflux du premier composant et exerce de ce fait une pression sur le deuxième composant, et
un appareil de dosage (13) destiné à un ajout dosé du deuxième composant au premier composant,
dans lequel l'appareil de dosage (13) comprend deux surfaces de dosage (17) avec une rugosité superficielle définie, entre lesquelles passe, parallèlement aux surfaces de dosage (17), le deuxième composant du fait de la pression exercée par la cloison (8), et
dans lequel la quantité du deuxième composant ajouté dépend de la rugosité superficielle des surfaces de dosage (17),
**caractérisé en ce que**
l'appareil de dosage (13) comprend deux blocs (15) avec plusieurs surfaces latérales (16), dans lequel respectivement au moins une des surfaces latérales (16) est réalisée en tant que surface de dosage (17),
les surfaces de dosage (17) s'aboutent, et
les blocs (15) de l'appareil de dosage (13) sont fixés dans le dispositif (1) par l'intermédiaire d'un élément de retenue (18) de telle manière qu'une pression d'écartement des blocs (15), et donc des surfaces de dosage (17), est empêchée grâce au deuxième composant se trouvant sous pression.

2. Dispositif selon la revendication 1, **caractérisé en ce que** la rugosité superficielle des surfaces de dosage (17) est au maximum Rₐ = 8 µm, de manière préférée au maximum Rₐ = 5 µm, de manière plus préférée au moins Rₐ = 0,4 µm et au maximum Rₐ = 4 µm.

3. Dispositif selon l'une quelconque des revendications précédentes, **caractérisé en ce que** l'insert de mélange est réalisé en tant qu'entonnoir (9).

4. Dispositif selon la revendication 3, **caractérisé en ce que** l'entonnoir présente une paroi d'entonnoir conique, dont l'angle d'inclinaison est compris entre 30° et 60° par rapport à l'axe longitudinal de l'entonnoir, est de manière préférée compris entre 40° et 50°, et est de manière plus préférée de 45°.

5. Dispositif selon la revendication 3 ou 4, **caractérisé en ce que** l'entonnoir (9) présente un col d'entonnoir (19), au niveau de l'extrémité inférieure (20) duquel sort le mélange de composants.

6. Dispositif selon la revendication 5, **caractérisé en ce que** le col d'entonnoir présente une longueur d'au maximum 1,5 mm, de manière préférée au maximum 1 mm, de manière plus préférée au maximum 0,8 mm, de manière encore plus préférée au maximum 0,5 mm, et de la manière la plus préférée comprise entre 0,1 mm et 0,5 mm.

7. Dispositif selon l'une quelconque des revendications 3 à 6, **caractérisé en ce que** l'entonnoir (9) présente, immédiatement après son extrémité inférieure (20) dans le sens d'écoulement, un logement (21) pour un mélangeur statique.

8. Dispositif selon l'une quelconque des revendications précédentes, **caractérisé en ce que** l'appareil de dosage (13) est agencé au voisinage de l'insert de mélange (9), dans lequel le deuxième composant sortant de l'appareil de dosage (13) afflue directement dans l'insert de mélange (9).

9. Dispositif selon l'une quelconque des revendications précédentes, **caractérisé en ce que** les deux blocs sont réalisés sous forme de parallélépipède rectangle (15), dans lequel respectivement au moins une surface latérale (16) plane forme une des surfaces de dosage (17).

10. Dispositif selon l'une quelconque des revendications précédentes, **caractérisé en ce que** les blocs (15) présentent respectivement une surface latérale (16) oblique, qui est réalisée en tant que surface de dosage (17).

11. Dispositif selon l'une quelconque des revendications précédentes, **caractérisé en ce que** la cloison est réalisée en tant que piston (8).
